Europäisches Patentamt

European Patent Office

Office européen des brevets

(19)

(11) Numéro de publication : **0 326 477 B1**

# FASCICULE DE BREVET EUROPEEN

(12)

(45) Date de publication du fascicule du brevet :
11.09.91 Bulletin 91/37

(51) Int. Cl.⁵ : **G01P 13/02**

(21) Numéro de dépôt : 89400190.8

(22) Date de dépôt : 24.01.89

(54) **Capteur de direction de l'écoulement de l'air, comportant un dispositif électromagnétique d'amortissement et de positionnement.**

(30) Priorité : 26.01.88 FR 8800834

(43) Date de publication de la demande :
02.08.89 Bulletin 89/31

(45) Mention de la délivrance du brevet :
11.09.91 Bulletin 91/37

(84) Etats contractants désignés :
BE DE ES GB GR IT LU NL

(56) Documents cités :
FR-A- 1 600 479
FR-A- 2 010 490
FR-A- 2 073 471
US-A- 2 918 817
US-A- 3 882 721

(73) Titulaire : THOMSON-CSF
51, Esplanade du Général de Gaulle
F-92800 Puteaux (FR)

(72) Inventeur : Boetsch, Antoine
THOMSON-CSF SCPI 19, avenue de Messine
F-75008 Paris (FR)
Inventeur : Chabanas, Denis
THOMSON-CSF SCPI 19, avenue de Messine
F-75008 Paris (FR)

(74) Mandataire : Benoit, Monique et al
THOMSON-CSF SCPI
F-92045 PARIS LA DEFENSE CEDEX 67 (FR)

EP 0 326 477 B1

## Description

La présente invention concerne les capteurs de direction de l'écoulement de l'air pour aéronefs ; elle a plus particulièrement pour objet un dispositif électromagnétique assurant l'amortissement du mouvement de la partie mobile d'un tel capteur, ainsi que, lorsque nécessaire, le positionnement de cette partie mobile à des fins de test.

Un tel capteur est notamment destiné à mesurer l'angle d'incidence d'un aéronef, c'est-à-dire l'angle que fait l'axe longitudinal de l'avion avec la direction d'écoulement de l'air dans le plan normal au plan de l'aéronef (ce dernier plan contenant, par exemple dans le cas d'un avion, l'axe longitudinal et les ailes), ou encore son angle de dérapage, c'est-à-dire l'angle analogue mais dans le plan de l'aéronef. Pour simplifier, on ne considèrera ci-après que les capteurs d'incidence pour avion, également appelés sondes d'incidence, étant entendu que l'invention s'applique à tout type de capteur de direction d'écoulement de l'air.

Une sonde d'incidence comporte généralement :
— une partie mobile en rotation, s'orientant dans la direction moyenne des filets d'air incidents, constituant l'élément sensible de la sonde ;
— une partie fixe, solidaire de l'avion, par rapport à laquelle est mesurée la rotation précédente.

Une telle sonde doit répondre à un certain nombre d'impératifs. Tout d'abord, elle doit assurer la mesure de l'incidence avec précision : en effet, il s'agit d'une grandeur essentielle pour le pilotage de l'avion. Ensuite, sa fiabilité doit être aussi grande que possible : en effet, les exigences de sécurité très grandes dans le domaine aéronautique rendent cet aspect tout particulièrement important. Enfin, il est souhaitable, s'agissant d'un matériel embarqué, que sa masse et son encombrement soient aussi faibles que possible.

Par ailleurs, l'élément mobile de la sonde peut être soumis à des mouvements d'oscillation en rotation, aussi bien en l'absence de variation d'incidence que lors d'une variation, avant d'atteindre la position finale. Il est donc nécessaire de doter la sonde de moyens d'amortissement pour pouvoir connaître, rapidement et à tout moment, la valeur précise de l'angle d'incidence sous forme d'un signal électrique stable.

Pour réaliser cet amortissement dans un tel contexte, différentes solutions sont connues à l'heure actuelle, qui sont généralement du type hydraulique, pneumatique ou électromagnétique.

Les dispositifs d'amortissement hydrauliques comportent des joints d'étanchéité sur l'axe de rotation de la partie mobile, qui font apparaître obligatoirement un couple de frottement dit couple de frottement sec, résistant au mouvement et sensiblement indépendant de la vitesse de ce mouvement, qui diminue la précision de positionnement de l'élément mobile de la sonde, ainsi que sa sensibilité. En effet, le couple de frottement sec appliqué sur l'axe qui porte l'élément sensible diminue la précision du positionnement de cet élément dans les filets d'air, et donc la précision de la mesure de l'angle ; en outre, il diminue également la sensibilité de la sonde dans la mesure où le couple moteur fourni par l'élément sensible doit être plus important pour faire tourner l'axe.

Les amortisseurs hydrauliques ont également l'inconvénient de présenter une variation considérable du coefficient d'amortissement dit visqueux, c'est-à-dire fonction de la vitesse du mouvement, en fonction de la température, cette variation étant due à la variation de la viscosité du liquide ; or, ainsi qu'il est connu, les variations de températures subies par un avion entre le sol et son altitude de croisière sont très importantes ; cette variation du coefficient d'amortissement modifie la réponse de la sonde lors d'un changement rapide de l'angle d'incidence. Enfin, sur le plan de la fiabilité, ce type de dispositif a également l'inconvénient de présenter des fuites au bout d'un certain temps de fonctionnement.

L'amortisseur pneumatique utilise pour son fonctionnement un gaz, généralement de l'air. Fonctionnant habituellement à la pression atmosphérique, il ne nécessite pas d'étanchéité entre partie mobile et partie fixe, ce qui est un avantage par rapport aux amortisseurs hydrauliques. Toutefois, la masse volumique de l'air varie fortement en fonction de l'altitude de l'avion, ce qui entraîne à son tour une forte variation du coefficient d'amortissement visqueux, dont les valeurs extrêmes sont fréquemment dans un rapport 5. En outre, l'amortissement étant généralement obtenu par laminage de l'air entre deux parois très peu distantes l'une de l'autre, il se produit en pratique des écarts très importants des coefficients d'amortissement d'un amortisseur à l'autre, dûs aux dispersions de fabrication sur les dimensions géométriques des éléments concernés.

Par ailleurs, il est nécessaire d'adjoindre à la sonde des moyens de positionnement de la partie mobile, destinés au contrôle du bon fonctionnement de la sonde. En effet, ce contrôle s'effectue à l'aide d'un dispositif appelé positionneur, qui communique à l'élément sensible une ou plusieurs positions angulaires prédéterminées ; on vérifie ensuite que les moyens de mesure de cette position donnent bien les mêmes valeurs prédéterminées. Le positionneur est en général un dispositif électromécanique couplé à l'axe de rotation auquel est relié l'élément mobile par l'intermédiaire de moyens de débrayage, de sorte à éviter des frottements additionnels en fonctionnement normal, en dehors des périodes de test. Toutefois, de tels dispositifs, notamment du fait de l'embrayage, sont complexes, volumineux et pas toujours fiables.

Des dispositifs d'amortissement électromagnétique sont décrits dans FR-A-1600479 et dans US-A-2918817.

La présente invention a pour objet une sonde d'incidence dans laquelle la fonction d'amortissement est réalisée électromagnétiquement, de façon à présenter un minimum de frottements secs et/ou de couples parasites, et dans lequel est réalisée simultanément la fonction de positionnement.

Plus précisément l'invention a pour objet un capteur tel que défini par la revendication 1.

D'autres objets, particularités et résultats de l'invention ressortiront de la description suivante, faite à titre d'exemple non limitatif et illustrée par les dessins annexés qui représentent :

— La figure 1, un mode de réalisation de la sonde d'incidence selon l'invention ;

— la figure 2, un mode de réalisation du dispositif électromagnétique d'amortissement de la sonde selon l'invention ;

— les figures 3a et 3b, une variante de réalisation d'un élément de la figure précédente ;

— les figures 4a, 4b et 4c, un mode de réalisation du dispositif électromagnétique d'amortissement et de positionnement de la sonde selon l'invention ;

— la figure 5, un autre mode de réalisation du dispositif d'amortissement et de positionnement de la sonde selon l'invention ;

— les figures 6a, 6b et 6c, un autre mode de réalisation du dispositif d'amortissement et de positionnement de la sonde selon l'invention ;

— les figures 7a, 7b et 7c, un autre mode de réalisation du dispositif d'amortissement et de positionnement de la sonde selon l'invention.

Sur ces différentes figures, les mêmes références se rapportent aux mêmes éléments.

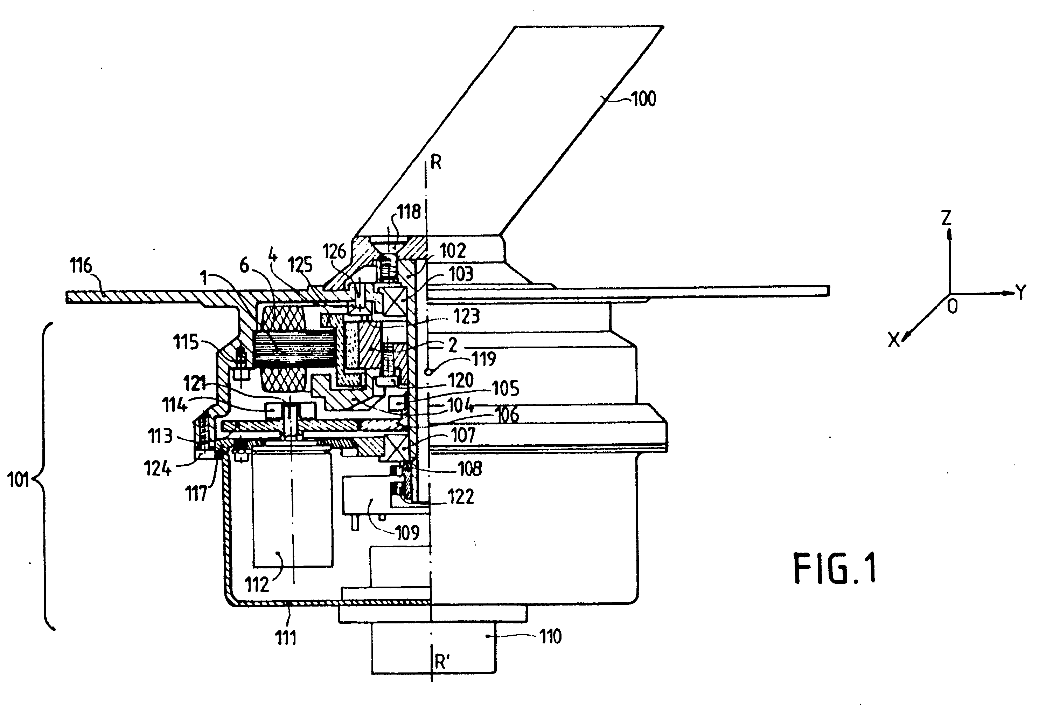

La figure 1 représente donc un mode de réalisation de la sonde d'incidence selon l'invention, dans un plan YOZ.

Cette sonde comporte une première partie, repérée 100, mobile autour d'un axe de rotation RR', cet axe étant parallèle à OZ. Cette pièce mobile constitue l'élément sensible de la sonde, s'orientant dans la direction des filets d'air. Elle peut être réalisée de toute façon connue ; par exemple, elle peut être constituée par un tube dit tube de pression, mobile en rotation autour de son axe longitudinal (RR'), comportant plusieurs prises de pression et s'orientant sous l'action de la pression différentielle. La pièce mobile 100 peut être également constituée par une ailette, appelée girouette, comme représentée sur la figure. Pour simplifier, la suite de la description sera faite dans le cas où la pièce mobile 100 est une girouette.

La sonde comporte une seconde partie, repérée 101, qui est destinée à être placée à l'intérieur du fuselage de l'avion porteur de la sonde, de sorte à venir affleurer ce fuselage dans un plan XOY, perpendiculaire au plan de la figure. Seule la partie située à gauche de l'axe de rotation RR' a été représentée en coupe sur la figure.

La girouette 100 est fixée par exemple par vis (118) sur l'épaulement d'un arbre de rotation mécanique 102 ; cet arbre est de préférence en forme de cylindre creux ; il est libre en rotation et guidé par deux roulements 103 et 107, par exemple du type à collerette ; les bagues extérieures de ces deux roulements sont tenues respectivement par une première pièce appelée corps et repérée 116, et par une seconde pièce appelée flasque arrière et repérée 117. Le corps 116 s'étend dans le plan XOY et il est destiné à être monté sur le fuselage de l'avion.

Entre ces deux roulements 103 et 107 sont fixés sur l'arbre 102 :

— une pièce 2 du dispositif d'amortissement, décrite ci-après, par exemple par l'intermédiaire d'un trou 119 réalisé dans l'arbre 102, perpendiculairement à son axe (RR'), et de goupilles ; la pièce 2 porte une butée 123, qui est donc solidaire de l'arbre 102 et de la girouette 100 et qui est destinée, en coopération avec une butée 125 fixée sur le corps 116 (vis 126 par exemple), à limiter le mouvement de la girouette.

— une pièce 104 formant contrepoids, destinée à réaliser l'équilibrage statique de l'ensemble mobile, fixée sur l'arbre 102 par exemple par l'intermédiaire de la pièce 2 (vis 120) ;

— une roue dentée centrale 106, fixée par exemple par un collier de serrage 105.

L'arbre 102 est immobilisé en translation par un écrou 108 venant se placer sur celle des extrémités de l'arbre qui est opposée à la girouette 100, en butée sur le roulement 107.

La partie intérieure 101 comporte encore :

— des pièces 1, 4 et 6, complétant le dispositif d'amortissement décrit ci-après, ces pièces étant fixées dans le corps 116 au moyen par exemple d'une vis 115 ;

— des moyens de mesure de l'angle de rotation de la girouette autour de l'axe RR' ; ces moyens sont par exemple constitués par un dispositif 112 du type résolver sans balais à transformateur, dont l'axe d'entrée 121 est couplé à l'arbre 102 par l'intermédiaire d'une roue dentée 113, fixée par exemple à l'aide d'un collier 114 et engrenant dans la roue centrale 106 ; le résolver 112 est fixé sur le flasque arrière 117 (vissé par exemple) ;

— des moyens 109 permettant l'alimentation électrique de la girouette 100 pour assurer son dégivrage, par chauffage ; ces moyens 109 sont par exemple constitués par un collecteur à lames souples dont la partie mobile est fixée sur l'arbre 102 contre l'écrou 108, par exemple par un écrou 122, et la partie fixe est fixée sur le flasque arrière 117 (fixation non visible sur la figure) ; les conducteurs (non représentés) issus de la partie mobile du collecteur 109 sont dirigés vers la girouette 100 par l'intérieur de l'arbre 102 ;

— un connecteur 110 recevant l'alimentation extérieure et assurant la connexion (non représentée) avec chacun des éléments électriques de la sonde ; il est porté par un capot 111 fixé (vis 124 par exemple) sur le flasque arrière 117 et fermant la sonde à sa partie inférieure.

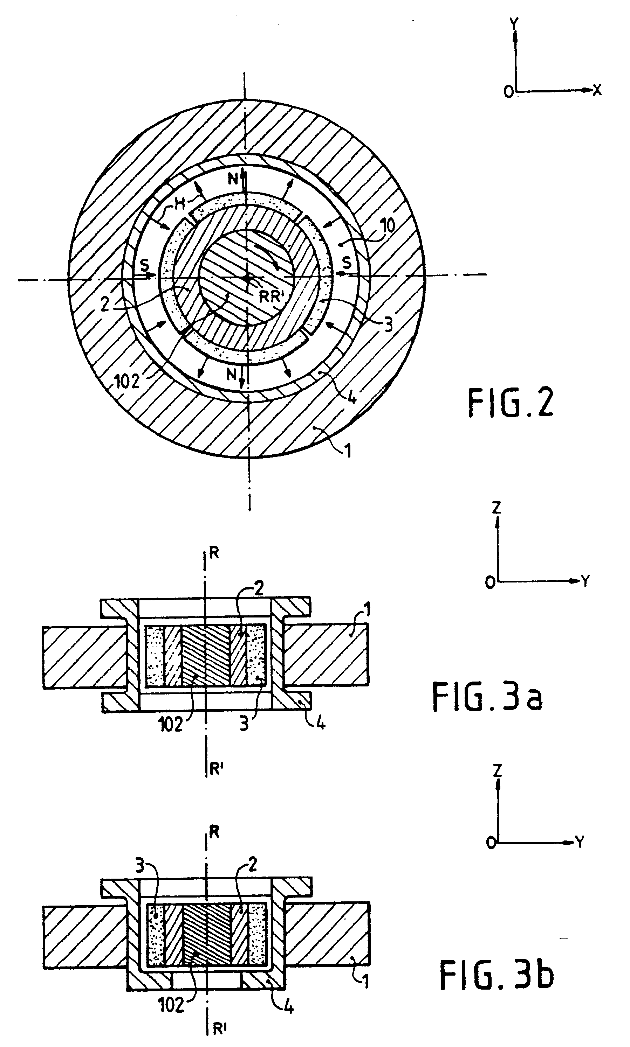

La figure 2 représente une vue en coupe dans le plan XOY d'un mode de réalisation du dispositif d'amortissement électromagnétique de la sonde selon l'invention.

Ce dispositif comporte une partie mobile en rotation, solidaire de l'arbre 102 de la figure précédente, lui même solidaire de la girouette 100, et une partie fixe disposée autour de la partie mobile.

La partie mobile est constituée par une pièce annulaire 2, appelée rotor, réalisée en matériau ferromagnétique et rendue solidaire de l'arbre 102 (représenté ici et dans les figures suivantes, pour simplifier, comme une pièce pleine), par exemple à l'aide du système trou-goupilles décrit figure 1 et non représenté ici. Le rotor 2 comporte des moyens de génération d'un champ magnétique radial, représenté par des flèches H, alterné, c'est-à-dire dont le sens varie le long de la périphérie du rotor, dans le plan de la figure. Ces moyens peuvent être des bobinages de conducteurs ou des aimants. On a représenté figure 2 un ensemble d'aimants 3, permanents, disposés à la périphérie du rotor 2, en nombre et selon une configuration tels qu'ils forment, dans cet exemple, quatre pôles illustrés sur la figure respectivement Nord (N) dans une direction parallèle à OY et Sud (S) dans la direction perpendiculaire.

La partie fixe du dispositif comporte une pièce 1, également en forme d'anneau, réalisée en matériau ferromagnétique, appelée stator et rendue solidaire de la partie fixe de la sonde, par exemple comme indiqué sur la figure 1. Le rotor 2 et le stator 1 sont coaxiaux (axe RR'). La face intérieure du stator 1, c'est-à-dire celle qui est en regard du rotor, porte, fixée sur elle, une pièce 4 électriquement conductrice, appelée douille. Entre la partie mobile (rotor 2 et aimants 3) et la partie fixe (stator 1 et douille 4) est défini un entrefer 10.

Le fonctionnement de ce dispositif est le suivant. En l'absence de la douille 4, le rotor 2 tourne librement, solidairement de la girouette 100. Lorsque le dispositif comporte la douille 4 et que le rotor 2 tourne, le champ magnétique qui règne dans l'entrefer 10 tourne à la même vitesse que le rotor. La douille 4 est alors traversée par le champ magnétique radial qui se déplace devant elle et elle est le siège de courants de Foucault, qui donnent naissance à un couple qui s'oppose au mouvement de rotation du rotor ; ce couple est sensiblement proportionnel à la vitesse de rotation du champ, donc du rotor, donc de la girouette qui en est solidaire. Ce couple antagoniste qui n'existe que si le rotor tourne et qui est proportionnel à la vitesse de rotation, est dit couple d'amortissement visqueux.

Afin de diminuer au maximum les effets parasites, le matériau ferromagnétique est choisi à très forte perméabilité magnétique, à anisotropie aussi faible que possible et à pertes hystérétiques également aussi faibles que possible. Plus particulièrement, les pertes hystérétiques donnent naissance à un couple résistant du type couple de frottement sec, qui est sensiblement constant et s'oppose au couple qui tente à faire tourner l'inducteur (rotor 2) par rapport à l'induit (stator 1). Or, ainsi qu'il est noté plus haut, la précision et la sensibilité de la sonde dépendent de façon directe de ce couple de frottement sec. A titre d'exemple, une sensibilité de l'ordre de 0,1° à 125 Noeuds (vitesse d'écoulement de l'air) exige un couple de frottement sec inférieur à 0,0005 Nm. Dans le dispositif selon l'invention, on utilise à cet effet des matériaux ferromagnétiques du type alliage fer-nickel à 48% de teneur en nickel ou des alliages fer-nickel-molybdène à 80% de teneur en nickel et 5% en mobybdène. Ces matériaux présentent des pertes hystérétiques de l'ordre de 35 $J.m^{-3}$/cycle, ou inférieures, et des champs coercitifs de l'ordre de 3,5 A/m, ou inférieurs.

Les figures 3a et 3b représentent deux variantes de réalisation d'un élément de la figure 2, à savoir la douille 4, vues en coupe dans un plan ZOY.

Sur ces figures, on retrouve donc l'arbre 102 portant le rotor 2 et les aimants 3 pour la partie mobile, et le stator 1 et la douille 4 pour la partie fixe. Toutefois, selon ces variantes, la douille 4 possède à ses extrémités des renflements afin d'augmenter sensiblement le couple d'amortissement visqueux précédent.

Sur la figure 3a, la douille 4 présente à titre d'exemple deux renflements de part et d'autre du stator 1, présentant ainsi une demi-section sensiblement en forme de U.

La figure 3b représente une autre variante de forme de la douille 4 dans laquelle sa demi-section est sensiblement en forme de Z. Sur la figure 1, la douille 4 est représentée selon cette dernière variante.

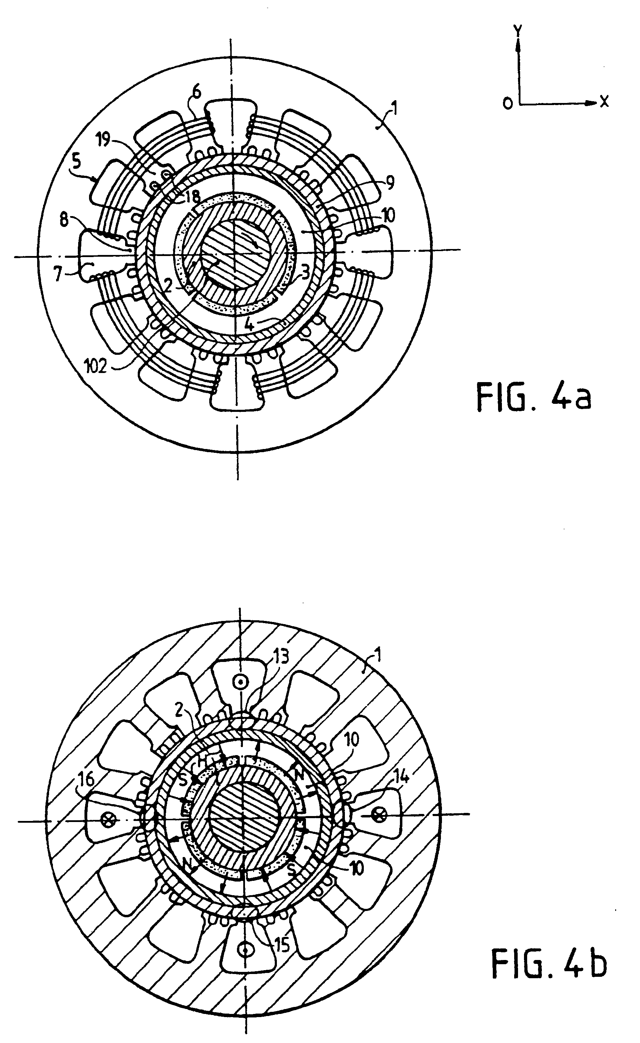

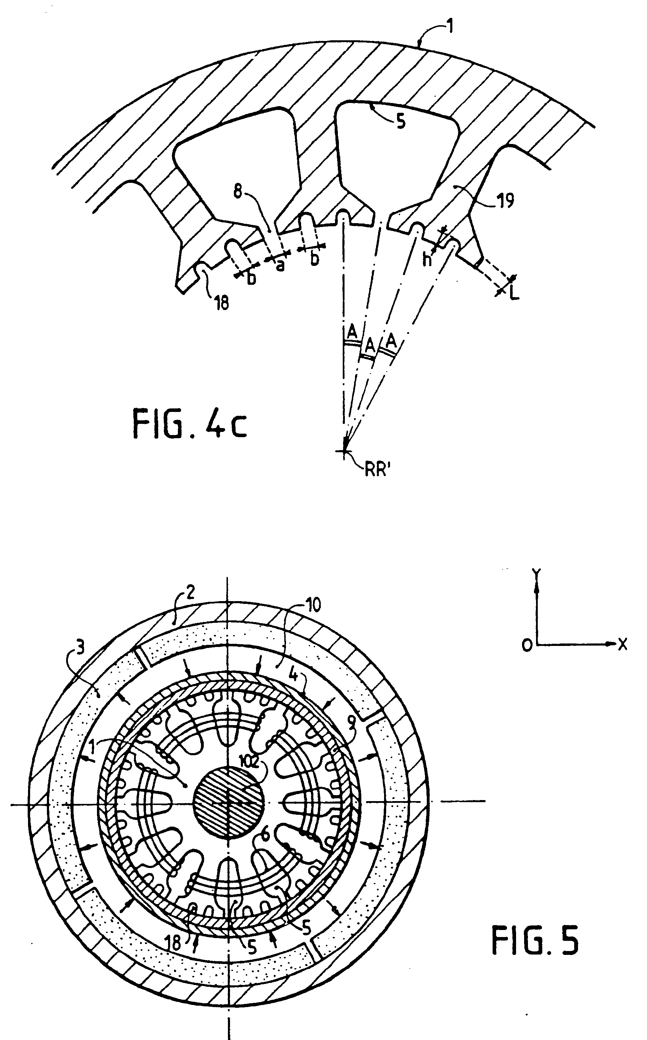

Les figures 4a, 4b et 4c représentent un mode de réalisation du dispositif électromagnétique d'amortissement et de positionnement de la sonde d'incidence selon l'invention, vu en coupe selon un plan XOY.

Sur la figure 4a, on retrouve l'arbre 102, le rotor 2, les aimants 3, l'entrefer 10, la douille 4 et le stator 1.

Toutefois, la forme du stator est ici modifiée. Il est toujours de forme générale annulaire mais présente maintenant des encoches 5, par exemple douze encoches, définissant entre elles des dents 19. Des fils conducteurs 6 sont bobinés dans les encoches autour d'une ou plusieurs dents, de manière à constituer une ou plusieurs phases et une ou plusieurs paires de pôles. Sur cette figure, on a représenté par exemple une seule phase, c'est-à-dire que les enroulements sont formés par un même conducteur ou par plusieurs conducteurs connectés en parallèle aux deux mêmes bornes d'entrée, formant deux paires de pôles, c'est-à-dire deux paires de bobinages distincts. Les encoches 5 présentent chacune une partie 7 suffisamment large pour contenir les conducteurs 6 et une ouverture 8, sur la face intérieure du stator, plus petite, pour minimiser les variations de réluctance au niveau des encoches. Le dispositif comporte encore, entre la douille 4 et le stator 1, une chemise 9 en matériau ferromagnétique dont le rôle est précisé plus loin. Enfin, sur cette figure 4a, le stator 1 n'est pas hachuré, bien que vu en coupe, pour la clarté du dessin.

La figure 4b représente le même schéma que la figure 4a mais simplifié afin d'en exposer le fonctionnement, notamment par la suppression des conducteurs 6, et sur lequel on a fait apparaître les directions du champ et du courant lorsque le dispositif est en fonctionnement.

Cette figure représente à titre d'exemple, pour un rotor à deux paires de pôles, le sens des courants dans les conducteurs symbolisés classiquement soit par un point encerclé soit par une croix encerclée selon qu'il est entrant ou sortant par rapport au plan de la figure, la position du rotor dans une de ses positions stables et le sens de l'induction dans l'entrefer 10, symbolisée par les flèches H.

Lorsqu'on alimente une ou plusieurs phases du stator (dans le cas de la figure, une seule phase), la chemise 9 atteint la saturation magnétique dans certaines zones, repérées 13, 14, 15 et 16, qui sont en regard de celles des encoches 5 qui sont traversées par des conducteurs. Le stator 1 agit alors comme celui d'un moteur classique, ayant les quatre encoches des zones 13-16 ouvertes. Le rotor 2 tourne pour se mettre dans la position angulaire stable la plus proche et correspondant à la configuration des champs forts. Tout écart du rotor 2 par rapport à sa (ou ses) position(s) stable(s) crée un fort couple de rappel vers cette position d'équilibre. On obtient ainsi un fonctionnement en positionneur.

Pour obtenir un positionnement selon une deuxième valeur d'angle (ou plusieurs autres valeurs), on réalise autour des dents un enroulement distinct (ou plusieurs) alimenté par une paire (ou plusieurs) de bornes distinctes et correspondant à des positions d'équilibre distinctes. De la sorte, la sélection par l'opérateur d'une valeur d'angle se traduit par la sélection d'une paire de bornes.

En l'absence de courant dans les conducteurs 6, le dispositif fonctionne comme celui de la figure 2 en dispositif d'amortissement.

Ce dispositif permet ainsi de réaliser, comme précédemment, la fonction d'amortissement avec un minimum de couples parasites résistants et, de plus, la fonction de positionnement au prix seulement d'enroulements de conducteurs supplémentaires, sans ajout de moyens de débrayage et sans addition de frottements et/ou de couples parasites supplémentaires.

En se reportant à la figure 4a, on voit qu'il a été a en outre pratiqué une pluralité de petites ouvertures 18 dans les dents 19 et, ce, pour permettre d'obtenir un couple parasite d'accrochage d'encoches qui soit minimum, ainsi qu'expliqué ci-après.

En effet, en l'absence de la chemise 9 et des petites ouvertures 18, et lorsque les ouvertures 8 ne sont pas vrillées, c'est-à-dire lorsque leurs génératrices sont parallèles à l'axe RR' de rotation, la présence des encoches et du champ magnétique créé par l'inducteur fait apparaître, lorsque l'inducteur tourne par rapport au stator, un couple parasite d'accrochage d'encoches de valeur élevée. Ce couple d'accrochage a pour origine le fait que le circuit magnétique qui se trouve en face de l'inducteur présente, au niveau de chaque encoche, une variation de réluctance importante. Cela a pour effet de créer des positions préférentielles pour le rotor, qui ne tourne plus alors librement ; de ce fait, ce couple décale de sa position d'équilibre la girouette à laquelle est lié le rotor, perturbant ainsi la mesure d'incidence. Ce couple d'accrochage peut atteindre des amplitudes de l'ordre de 0,04 Nm, ce qui est rédhibitoire compte tenu de la précision souhaitée sur la mesure d'incidence.

Afin de diminuer ce couple parasite, on utilise la technique du vrillage qui s'applique soit à l'inducteur, soit à l'induit, soit aux deux éléments simultanément; elle consiste à avoir, pour la génératrice des ouvertures 8, non plus une direction parallèle à l'axe de rotation RR' mais une hélice, dont la longueur et l'angle sont tels que l'extrémité d'une hélice soit alignée (selon RR') avec le début de l'hélice suivante. L'angle de vrillage est donc égal à 360° divisé par le nombre d'encoches. Dans le cas de la figure 4a, les encoches étant au nombre de douze, on obtient un angle de vrillage de 30°, ce qui est ici une valeur trop élevée. En effet, les contraintes d'encombrement minimum qui pèsent sur la sonde conduisent à choisir un stator dont la longueur (parallèlement à l'axe OZ) est aussi courte que possible ; typiquement, elle peut être de l'ordre du centimètre. La réalisation d'ouvertures en hélice avec un tel angle de vrillage est alors technologiquement très difficile.

Afin de réduire cet angle, on réalise donc les petites ouvertures 18, par exemple deux ouvertures par dent, ce qui conduit dans le cas de la figure 4a à un angle de vrillage divisé par trois, c'est-à-dire 10°. De la sorte, il est possible de diminuer l'amplitude du couple d'accrochage environ dans un rapport 10, soit 0,004 Nm dans l'exemple précédent.

L'ajout d'une chemise en matériau ferromagnétique tel que la chemise 9, qui masque les ouvertures 8 et 18 vues de l'inducteur, permet de diminuer très sensiblement les variations de réluctance présentées par le stator. A cet effet, la chemise 9 doit être d'une épaisseur telle qu'elle ne soit pas saturée par le flux inducteur du rotor mais qu'elle soit facilement saturée au niveau des ouvertures 8 par le champ de l'induit, afin d'obtenir le fonctionnement en positionneur. En outre, pour les mêmes raisons que le stator 1, le matériau utilisé pour réaliser la chemise 9 doit présenter une grande perméabilité magnétique, être aussi isotrope que possible et présenter des pertes hystérétiques aussi faibles que possible. En utilisant comme exposé ci-dessus des ouvertures 8 et 18 vrillées et une chemise 9, on obtient un couple parasite d'accrochage encore réduit d'un facteur 10, soit 0,0004 Nm dans l'exemple précédent, ce qui permet d'atteindre la précision recherchée pour la sonde d'incidence.

La figure 4c représente une vue en coupe partielle dans le plan XOY du stator 1, mettant en évidence les encoches 5 et les ouvertures 8 et 18.

Il apparaît sur cette figure que l'angle formé par l'axe des deux ouvertures consécutives, est constant quelle que soient les ouvertures considérées, 18 ou 8, et égal à A. En outre, la largeur des petites ouvertures 18, prise le long du cercle intérieur formant le stator 1, est constante (b). En ce qui concerne la profondeur des petites ouvertures 18, elle est également constante et égale à h. Les calculs et expériences de la Déposante montre qu'un fonctionnement satisfaisant est obtenu lorsque la largeur (b) des petites ouvertures 18 est voisine de celle (a) des ouvertures 8, et que leur profondeur (h) est de l'ordre de grandeur de la longueur (L) des ouvertures 8.

La figure 5 représente un autre mode de réalisation du dispositif d'amortissement et de positionnement de la sonde selon l'invention, vu en coupe dans le plan XOY.

Cette variante de réalisation correspond à une inversion de la position des ensembles fixes et mobiles l'un par rapport à l'autre. Le rotor 2 et les aimants 3 sont placés maintenant à l'extérieur du dispositif, le stator 1 étant à l'intérieur. Le stator 1 comporte toujours à sa périphérie, successivement, une chemise 9 ferromagnétique et une douille 4 conductrice.

Le fonctionnement de ce dispositif est identique à ce qui est décrit précédemment.

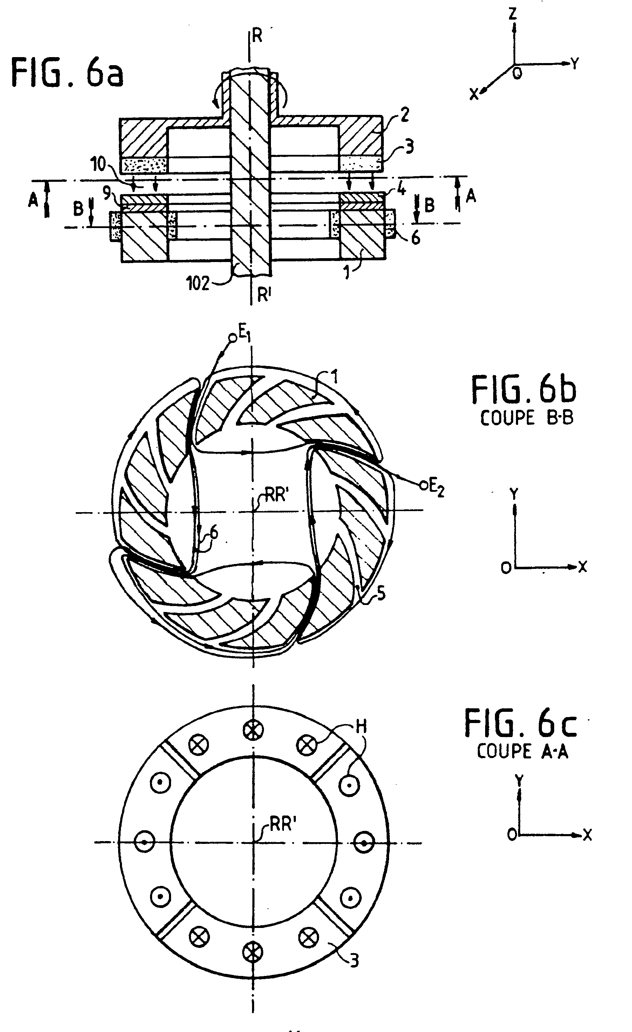

Les figures 6a, 6b et 6c représentent un autre mode de réalisation du dispositif d'amortissement et de positionnement de la sonde selon l'invention.

Dans ce mode de réalisation, le champ magnétique de l'inducteur est axial, c'est-à-dire dirigé selon l'axe de rotation RR'.

La figure 6a représente une coupe du dispositif dans le plan ZOY qui contient l'axe de rotation RR' ; la figure 6b représente une coupe de ce même dispositif selon un axe BB de la figure 6a, dans un plan parallèle à XOY, et la figure 6c représente une coupe selon un axe AA du dispositif de la figure 4a, également dans un plan parallèle à XOY.

Le rotor 2, solidaire de l'arbre 102 est formé ici encore d'un anneau en matériau ferromagnétique, d'axe RR', portant sur la périphérie d'une face les aimants 3. Le stator 1, en forme d'anneau d'axe RR' en matériau ferromagnétique, comporte les encoches 5 dont certaines au moins sont traversées par le conducteur 6 bobiné autour du stator. Ce dernier porte un disque en matériau ferromagnétique constituant la chemise 9 et un second anneau en matériau bon conducteur électrique, constituant la douille 4, en vis à vis du rotor, définissant ainsi l'entrefer 10.

La figure 6b, qui est donc une coupe selon l'axe BB passant dans le stator 1 met en évidence l'enroulement des conducteurs 6 correspondant à une phase. Les références $E_1$ et $E_2$ représentent les points d'alimentation de l'enroulement.

La figure 6c, qui est une coupe effectuée selon l'axe AA situé dans l'entrefer 10, représente un exemple particulier d'une disposition des aimants dans le cas d'un inducteur à deux paires de pôles. Le sens de l'induction (flèches H) est représenté selon les mêmes normes que précédemment.

Pour simplifier les dessins, l'axe 102 n'a pas été représenté sur les figures 6b et 6c.

Il apparaît sur la figure 6b que les encoches 5 sont vrillées, pour les raisons exposées plus haut, en relation avec les figures 4. Toutefois, dans cette variante, la réalisation d'encoches vrillées ne se heurte pas aux mêmes difficultés technologiques et il est possible d'obtenir des angles de vrillage importants, rendant ainsi inutiles les petites encoches telles que 18 des figures 4.

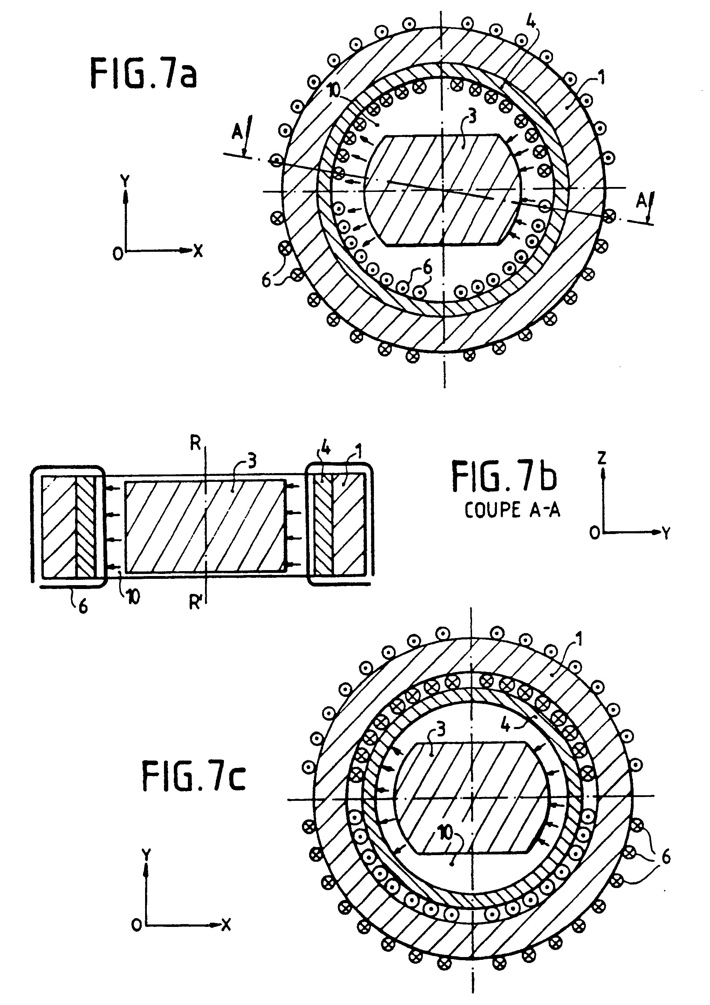

Les figures 7a, 7b et 7c représentent un autre mode de réalisation du dispositif d'amortissement et de positionnement de la sonde d'incidence selon l'invention.

Cette variante, reprend la structure de base d'un moteur couple à aimants permanents.

Sur la figure 7a, qui est une coupe dans le plan XOY, on retrouve le stator 1 constitué par un anneau sans encoche, bobiné en anneau Gramme comme plus visible sur la figure 7b, qui est une coupe selon l'axe AA de la figure 7a, effectuée donc selon le plan YOZ. Chaque conducteur 6 encercle l'anneau 1. Le dispositif comporte également la douille 4 en matériau conducteur, qui peut être mise indifféremment dans l'espace compris entre l'anneau 1 et les conducteurs 6, comme représenté sur les figures 7a et 7b, ou à l'extérieur de cet espace comme représenté sur la figure 7c, qui est également une coupe dans le plan XOY et qui représente une variante du dispositif de la figure 7a. L'inducteur, solidaire de l'arbre 102 non représenté, est constitué ici par un ou plusieurs aimants 3 ; dans cet exemple particulier, on a représenté une seule paire de pôles, dans la position stable en mode de positionnement. Les deux éléments 1 et 3 sont concentriques. On a représenté également le sens du courant et celui du champ magnétique selon la même représentation que précédemment.

Il est bien entendu que pour obtenir d'autres positions stables, il suffit de rajouter des phases différentes sur l'anneau 1.

On a ainsi décrit une sonde d'incidence comportant des moyens d'amortissement électromagnétiques, ces mêmes moyens étant en outre susceptibles d'assurer une fonction de positionnement à condition d'ajouter des bobinages conducteurs au stator. Ces moyens permettent de répondre aux contraintes qui s'imposent à une sonde d'incidence, à savoir :

— précision et sensibilité, du fait que l'amortissement et, le positionnement sont réalisés électromagnétiquement avec un minimum de frottement sec et/ou couples parasites ;

— fiabilité, du fait que le dispositif ne comporte pas d'éléments sensibles, tels que fluide ou débrayage ;

— masse et volume réduits, du fait notamment qu'un même dispositif est susceptible d'assurer les deux fonctions.

## Revendications

1. Capteur de direction de l'écoulement de l'air pour la détermination de l'angle que fait un axe d'un aéronef avec cette direction d'écoulement, comportant :

— un élément (100) fixé sur un arbre (102), l'ensemble étant mobile en rotation autour de l'axe (RR') de l'arbre, l'élément mobile étant susceptible de s'orienter dans la direction d'écoulement de l'air ;

— une partie fixe destinée à être solidaire de l'aéronef ;

— des moyens de mesure (112) de la rotation de l'élément mobile par rapport à la partie fixe ;

— des moyens d'amortissement du mouvement de l'élément mobile ;

les moyens d'amortissement comportant :

— une partie mobile (2), appelée rotor, réalisée en matériau ferromagnétique et fixée sur l'arbre de rotation (102) ;

— des moyens (3), mécaniquement solidaires du rotor, assurant la génération d'un champ magnétique alterné ;

— une partie fixe (1), appelée stator, réalisée en matériau ferromagnétique et solidaire de la partie fixe de la sonde ;

— des moyens (4) électriquement conducteurs, solidaires mécaniquement du stator, placés dans le champ magnétique, celui-ci induisant lors du mouvement du rotor, dans les moyens conducteurs, un couple résistant dirigé en sens inverse du mouvement du rotor, sensiblement proportionnel à la vitesse angulaire de ce dernier, assurant ainsi un amortissement du mouvement du rotor ;

— des moyens de positionnement de l'élément mobile dans une position prédéterminée, comportant des fils conducteurs (6) passant dans des encoches (5) prévues dans le stator, les fils constituant au moins une phase et une paire de pôles, le passage d'un courant dans ces conducteurs assurant le positionnement du rotor (2) et par suite de l'élément mobile dans une position prédéterminée.

2. Capteur selon la revendication 1, caractérisé par le fait que les moyens (3) de génération d'un champ magnétique comportent une pluralité d'aimants polarisés, fixés à la périphérie du rotor (2).

3. Capteur selon l'une des revendications précédentes, caractérisé par le fait que le champ magnétique est radial par rapport à l'axe de rotation (RR') et que stator (1) et rotor (2) sont sensiblement en forme d'anneaux concentriques.

4. Capteur selon la revendication 3, caractérisé par le fait que le stator (1) est disposé autour du rotor (2).

5. Capteur selon la revendication 3, caractérisé par le fait que le rotor (2) est disposé autour du stator (1).

6. Capteur selon l'une des revendications 3 à 5, caractérisé par le fait que les moyens (4) conducteurs sont en forme de bague, fixée sur la face du stator (1) qui est en regard du rotor (2).

7. Capteur selon la revendication 6, caractérisé par le fait que la bague (4) présente des excroissances assurant une augmentation du couple d'amortissement.

8. Capteur selon l'une des revendications 1 ou 2, caractérisé par le fait que le stator (1) et le rotor (2) sont disposés sur l'axe de rotation (RR'), l'un au dessus de l'autre et que le champ magnétique est dirigé selon l'axe de rotation.

9. Capteur selon la revendication 1, caractérisé par le fait que l'ouverture (8) des encoches (5) est vrillée.

10. Capteur selon l'une des revendications 1 ou 9, caractérisé par le fait que le stator comporte, entre les encoches (5), des petites ouvertures (18) uniformément réparties.

11. Capteur selon l'une des revendications 1 à 10, caractérisé par le fait qu'il comporte en outre une chemise (9) en matériau ferromagnétique, disposée sur le stator (1) de sorte à masquer les encoches (5) et les petites ouvertures (18).

12. Capteur selon l'une des revendications 1, 3, 4, 5, 6 ou 7, caractérisé par le fait que les moyens (3) de génération d'un champ magnétique constituent le rotor, et qu'il comporte en outre au moins un fil conducteur (6) bobiné autour du stator.

—

## Patentansprüche

1. Sonde zur Erfassung der Strömungsrichtung der Luft für die Bestimmung des Winkels zwischen der Achse eines Flugzeugs und dieser Strömungsrichtung,

— mit einem auf einer Welle (102) befestigten Element (100), die beide um die Achse (RR') der Welle drehbar sind, wobei sich das bewegliche Element nach der Strömungsrichtung ausrichten kann,

— mit einem ortsfesten Teil, das am Flugzeug befestigt werden kann,

— mit Mitteln (112) zur Messung der Drehung des beweglichen Elements bezüglich des feststehenden Teils,

— mit Mitteln zum Dämpfen der Bewegung des beweglichen Elements,

wobei die Dämpfungsmittel aufweisen :

— einen beweglichen Teil (2), Rotor genannt, der aus ferromagnetischem Material besteht und auf der Drehwelle (102) befestigt ist,

— am Rotor mechanisch befestigte Mittel (3), die die Erzeugung eines magnetischen Wechselfeldes bewirken,

— einen feststehenden Teil (1), Stator genannt, der aus ferromagnetischem Material besteht und mit dem feststehenden Teil der Sonde verbunden ist,

— elektrische leitende Mittel (4), die mechanisch mit dem Stator verbunden sind und im Magnetfeld liegen, wobei letzteres während der Bewegung des Rotors in die leitenden Mittel ein Widerstandsmoment induziert, das entgegen der Drehrichtung des Rotors wirkt und im wesentlichen proportional zur Winkelgeschwindigkeit des Rotors ist, wodurch sich eine Dämpfung der Rotorbewegung ergibt,

— Mittel, um das bewegliche Element in eine vorgegebene Stellung zu bringen, wobei diese Mittel Leiterdrähte (6) aufweisen, die in Nuten (5) im Stator verlaufen und mindestens eine Phase und ein Polpaar bilden, wobei der Durchgang eines Stroms durch diese Leiter den Rotor (2) und somit das bewegliche Element in eine vorbestimmte Stellung bringt.

2. Sonde nach Anspruch 1, dadurch gekennzeichnet, daß die Mittel (3), die ein Magnetfeld erzeugen, eine Vielzahl von polarisierten Magneten aufweisen, die an der Peripherie des Rotors (2) befestigt sind.

3. Sonde nach einem der vorhergehenden Ansprüche, dadurch gekennzeichnet, daß das Magnetfeld radial zur Drehachse (RR') verläuft und daß der Stator (1) und der Rotor (2) im wesentlichen als konzentrische Ringe ausgebildet sind.

4. Sonde nach Anspruch 3, dadurch gekennzeichnet, daß der Stator (1) um den Rotor (2) herum angeordnet ist.

5. Sonde nach Anspruch 3, dadurch gekennzeichnet, daß der Rotor (2) um den Stator (1) herum angeordnet ist.

6. Sonde nach einem der Ansprüche 3 bis 5, dadurch gekennzeichnet, daß die leitenden Mittel (4) aus einem Ring bestehen, der auf der Seite des Stators (1) befestigt ist, die dem Rotor (2) gegenüberliegt.

7. Sonde nach Anspruch 6, dadurch gekennzeichnet, daß der Ring (4) Ausbuchtungen aufweist, die eine Erhöhung des Dämpfungsmoments bewirken.

8. Sonde nach einem der Ansprüche 1 oder 2, dadurch gekennzeichnet, daß der Stator (1) und der Rotor (2) auf der Achse (RR') übereinander angeordnet sind und daß das magnetische Feld in Richtung der Drehachse verläuft.

9. Sonde nach Anspruch 1, dadurch gekennzeichnet, daß die Öffnung (8) der Nuten (5) verdrillt ist.

10. Sonde nach einem der Ansprüche 1 oder 9, dadurch gekennzeichnet, daß der Stator zwischen den Nuten (5) kleine gleichmäßig verteilte Öffnungen (18) aufweist.

11. Sonde nach einem der Ansprüche 1 bis 10, dadurch gekennzeichnet, daß sie außerdem eine Hülle (8) aus ferromagnetischem Material besitzt, die auf dem Stator (1) so angeordnet ist, daß die Nuten (5) und die kleinen Öffnungen (18) verdeckt werden.

12. Sonde nach einem der Ansprüche 1, 3, 4, 5, 6 oder 7, dadurch gekennzeichnet, daß die Mittel (3) zur Erzeugung eines Magnetfelds den Rotor bilden und daß außerdem mindestens ein Leiterdraht (6) um den Stator herum gewickelt ist.

**Claims**

1. An air-flow direction sensor for determining the angle between the axis of an aircraft and said flow direction, comprising

— an element (100) secured to a shaft (102), both being rotatable about the axis (RR') of the shaft, the rotating element being able to come into alignment with the air flow direction,

— a stationary part intended to be integral with the aircraft,

— means (112) for measuring the rotation of the rotatable element with respect to the stationary part,

— means for damping the movement of the rotatable element, the damping means comprising :

— a mobile part (2) referred to as rotor and realised from ferromagnetic material and fixed to the rotation shaft (102),

— means (3) mechanically fixed to the rotor and ensuring the creation of an alternating magnetic field,

— a stationary part (1) referred to as stator and realised from ferromagnetic material and secured to the stationary part of the sensor,

— electrically conducting means (4) which are mechanically integral with the stator and are placed in the magnetic field, the latter inducing into the conducting means during movement of the rotor a braking torque directed in the countersense of the rotor movement, this torque being substantially proportional to the angular speed of the rotor and thus ensuring a damping of the rotor movement,

— means allowing to position the rotatable element in a predetermined position, these means comprising conducting wires (6) passing through notches (5) in the stator, the wires constituting at least one phase and one pole pair, a current passing through these conductors ensuring the rotor (2) and consequently the rotatable element to be positioned in a predetermined position.

2. A sensor according to claim 1, characterized in that the means (3) which create a magnetic field comprise a plurality of polarized magnets which are fixed to the periphery of the rotor (2).

3. A sensor according to one of the preceding claims, characterized in that the magnetic field is a radial field with respect to the axis (RR') of rotation and that the stator (1) and the rotor (2) are constituted by concentric rings.

4. A sensor according to claim 3, characterized in that the stator (1) is disposed around the rotor (2).

5. A sensor according to claim 3, characterized in that the rotor (2) is disposed around the stator (1).

6. A sensor according to one of claims 3 to 5, characterized in that the conducting means (4) are ring-shaped and are fixed to that surface of the stator (1) which faces the rotor (2).

7. A sensor according to claim 6, characterized in that the ring (4) presents protuberances which ensure an increase of the braking torque.

8. A sensor according to one of claims 1 or 2, characterized in that the stator (1) and the rotor (2) are disposed on the rotation axis (RR') one above the other, and that the magnetic field is directed along the rotation axis.

9. A sensor according to claim 1, characterized in that the opening (8) of the notches (5) is twisted.

10. A sensor according to one of claims 1 or 9, characterized in that the stator comprises between the notches (5) small openings (18) which are uniformly distributed.

11. A sensor according to one of claims 1 to 10, characterized in that it further comprises a sleeve (9) made of ferromagnetic material and disposed on the stator (1) in such a way that the notches (5) and small openings (18) are masked.

12. A sensor according to one of claims 1, 3, 4, 5, 6 or 7, characterized in that the means (3) creating a magnetic field constitute the rotor, and that it further comprises at least one conducting wire (6) wound around the stator.

FIG.1

FIG.2

FIG.3a

FIG.3b

FIG. 4a

FIG. 4b

FIG. 4c

FIG. 5

FIG. 6a

FIG. 6b
COUPE B·B

FIG. 6c
COUPE A·A

FIG.7a

FIG.7b

COUPE A-A

FIG.7c